# EUROPEAN PATENT APPLICATION

(11) **EP 4 432 732 A1**
(43) Date of publication of application: **18.09.2024**
(21) Application number: 22892942.8
(22) Date of filing: 04.02.2022
(51) Int. Cl.: H04W 48/02, H04W 48/10, H04W 60/00, H04W 76/27

(54) **METHOD AND APPARATUS FOR OPERATION OF USER EQUIPMENT IN WIRELESS COMMUNICATION SYSTEM**

(30) Priority: 11.11.2021 KR 20210154961; 11.11.2021 KR 20210155025
(71) Applicant: LG Electronics Inc., Yeongdeungpo-gu Seoul 07336 (KR)
(72) Inventor: PARK, Sangmin, Seoul 06772 (KR); KIM, Hyun Sook, Seoul 06772 (KR)
(74) Representative: Mooser, Sebastian Thomas
(86) International application number: PCT/KR2022/001736
(87) International publication number: WO 2023/085519

(57) **Abstract**

A method for operating a terminal in a wireless communication system may include receiving, by the terminal, a SIB including access category (AC) information, determining, by the terminal, an AC value by considering the AC information included in the SIB based on an access attempt type, and performing access barring check for the determined AC value and performing an access attempt.

## Description

### Technical Field

The present disclosure relates to a wireless communication system, and more particularly, to a method and device for operating a terminal. Specifically, the present disclosure relates to a method and device for processing an access category for an access attempt of a terminal.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### Disclosure

### Technical Problem

The present disclosure relates to a method and device for operating a terminal in a wireless communication system.

The present disclosure relates to a method and device for solving an under barring problem that occurs due to difference between a release applied to a terminal and a release applied to a network in a wireless communication system.

The present disclosure relates to a method and device for providing access category information by considering a standardized access category that is differently defined according to release in a wireless communication system.

The present disclosure may provide a method and device for accessing by a terminal through network congestion control in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

As an example of the present disclosure, a method for operating a terminal in a wireless communication system may include receiving, by the terminal, a system information block (SIB) including access category (AC) information, determining, by the terminal, an AC value by considering the AC information included in the SIB based on an access attempt type, and performing access barring check for the determined AC value and performing an access attempt.

In addition, as an example of the present disclosure, a terminal operating in a wireless communication may include at least one transceiver, at least one processor, and at least one memory coupled operably with the at least one processor and storing instructions that instruct, when executed, the at least one processor to perform a specific operation, and the specific operation may control the transceiver to receive a system information block (SIB) including access category (AC) information, determine an AC value by considering the AC information included in the SIB based on an access attempt type, and perform access barring check for the determined AC value and perform an access attempt.

In addition, as an example of the present disclosure, a method for operating a base station in a wireless communication system may include transmitting a system information block (SIB) to a terminal and receiving an access attempt request from the terminal, wherein the SIB may include AC information, and the terminal may check access barring by considering the AC information included in the SIB based on an access attempt type of the terminal and then transmit the access attempt request.

In addition, as an example of the present disclosure, a network operating in a wireless communication may include at least one transceiver, at least one processor, and at least one memory coupled operably with the at least one processor and storing instructions that instruct, when executed, the at least one processor to perform a specific operation, and the specific operation may control the transceiver to transmit a system information block (SIB) and control the transceiver to receive an access attempt request from a terminal, wherein the SIB may include AC information, and the terminal may check access barring by considering the AC information included in the SIB based on an access attempt type of the terminal and then transmit the access attempt request.

In addition, as an example of the present disclosure, a device may include at least one memory and at least one processor functionally coupled with the at least one memory, the at least one processor may control the device to perform a specific operation, and the specific operation may be configured to: receive a system information block (SIB) including access category (AC) information, determine an AC value by considering the AC information included in the SIB based on an access attempt type, and perform access barring check for the determined AC value and perform an access attempt.

In addition, as an example of the present disclosure, a non-transitory computer-readable medium storing at least one instruction may include the at least one instruction that is executable by a processor, and the at least one instruction may be configured to: receive a system information block (SIB) including access category (AC) information, determine an AC value by considering the AC information included in the SIB based on an access attempt type, and perform access barring check for the determined AC value and perform an access attempt.

In addition, the following may commonly apply.

As an example of the present disclosure, the AC information included in the SIB may include information indicating whether or not there is AC usage limitation and be information indicating whether or not usage of the AC is limited, and in case the information indicating whether or not there is AC usage limitation has a first value, a terminal may determine that only default ACs are applied in a cell or node B corresponding to the SIB, and in case the information indicating whether or not there is AC usage limitation has a second value, the terminal may determine that AC usage is not limited in the cell or node B corresponding to the SIB.

In addition, as an example of the present disclosure, in case information indicating whether or not there is AC usage limitation is indicated as a first value, a radio resource control (RRC) layer of a terminal may receive information on an access identity, an access category, and a secondary AC from a non-access stratum (NAS) layer of a terminal, and in case the RRC layer receives an access barring check request from the NAS layer based on a first AC value, if the first AC value is not a value within default ACs, access barring check may be performed based on a second AC value that is indicated through the secondary AC information.

In addition, as an example of the present disclosure, in case information indicating whether or not there is AC usage limitation is indicated as a first value, a RRC layer of a terminal may notify application of AC usage limitation to a NAS layer of the terminal, and the NAS layer may determine an AC value among default AC values.

In addition, as an example of the present disclosure, in case a NAS layer of a terminal determines, for the AC value, an AC value other than default AC values, the NAS layer may deliver a primary AC value and a secondary AC value to a RRC layer of the terminal, and the RRC layer may perform access barring check both for the primary AC value and for the secondary AC value and determine that an access attempt is barred based on any one of the AC values being barred.

In addition, as an example of the present disclosure, the SIB may include a highest standardized AC value, a terminal may perform an access attempt based on a highest standardized AC value, and the highest standardized AC value may be determined based on an AC that is supported in a network.

In addition, as an example of the present disclosure, in case an AC value determined by a terminal is greater than a highest standardized AC value, an access attempt may be barred based on access barring check.

In addition, as an example of the present disclosure, a RRC layer of a terminal may deliver a highest standardized AC value to a NAS layer of the terminal, and in case an AC value is determined, the NAS layer may determine, for the AC value, an AC value that is smaller than or equal to the highest standardized AC value.

In addition, as an example of the present disclosure, the SIB may include information on a bit map indicating supported standardized AC values, the bit map may be configured as three octets or four octets, and an access attempt may be performed based on any one of the standardized AC values that are supported based on the bit map.

In addition, as an example of the present disclosure, the SIB may include release information or version information that is supported by a network or a base station, and an access attempt may be performed based on any one of standardized AC values that are determined based on the release information or the version information.

In addition, as an example of the present disclosure, a terminal may obtain AC information through a registration accept message or a UE configuration update command message as a NAS message.

### Advantageous Effects

The present disclosure may provide a method and device for operating a device in a wireless communication system.

The present disclosure may solve an under barring problem that occurs due to difference between a release applied to a terminal and a release applied to a network in a wireless communication system.

The present disclosure may perform network congestion control in a wireless communication system by providing access category information in consideration of a standardized access category that is differently defined according to release.

The present disclosure may enable a terminal to efficiently access a network through network congestion control in a wireless communication system.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

### Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.
FIG. 1 is a view illustrating various reference points.
FIG. 2 is a view illustrating an example of a network structure of an evolved universal terrestrial radio access network (E-UTRAN) to which the present disclosure is applicable.
FIG. 3 is a view illustrating a general E-URTAN and an example of an architecture of an evolved packet core (EPC).
FIG. 4 is a view illustrating an example of a structure of a radio interface protocol in a control plane between user equipment (UE) and evolved node B (eNB).
FIG. 5 is a view illustrating an example of a structure of a radio interface protocol in a user plane between UE and eNB.
FIG. 6 is a view illustrating an example of an architecture of a general new radio (NR)-radio access network (RAN).
FIG. 7 is a view illustrating an example of functional separation of a general NG-RAN and a 5th generation core (5GC).
FIG. 8 is a view illustrating an example of a general architecture of a 5th generation (5G) system.
FIG. 9 is a view illustrating an example of a wireless device applicable to the present disclosure.
FIG. 10 is a flowchart showing an operating method that is applied to the present disclosure.
FIG. 11 is a flowchart showing an operating method that is applied to the present disclosure.

### Mode for Invention

Following embodiments are achieved by combination of structural elements and features of the present disclosure in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present disclosure. The order of operations described in the embodiments of the present disclosure may be changed. Some structural elements or features of one embodiment may be included in another embodiment, or may be replaced with corresponding structural elements or features of another embodiment.

In the description of the drawings, procedures or steps which render the scope of the present disclosure unnecessarily ambiguous will be omitted and procedures or steps which can be understood by those skilled in the art will be omitted.

In the entire specification, when a certain portion "comprises" or "includes" a certain component, this indicates that the other components are not excluded, but may be further included unless specially described. The terms "unit", "-or/er" and "module" described in the specification indicate a unit for processing at least one function or operation, which may be implemented by hardware, software and a combination thereof. In addition, "a or an", "one", "the" and similar related words may be used as the sense of including both a singular representation and a plural representation unless it is indicated in the context describing the present specification (especially in the context of the following claims) to be different from this specification or is clearly contradicted by the context.

In this specification, the embodiments of the present disclosure are described with focus on the relationship of data reception and transmission between a base station and a mobile station. Herein, the base station means a terminal node of a network that performs direct communication with the mobile station. In this document, a specific operation, which is described to be performed by a base station, may be performed by an upper node of the base station in some cases.

That is, in a network consisting of a plurality of network nodes including a base station, various operations for communicating with a mobile station may be performed by the base station or network nodes other than the base station. Herein, "base station" may be replaced by such terms as "fixed station", "Node B", "eNode B(eNB)", "gNode B(gNB)", "ng-eNB", "advanced base station(ABS)", or "access point".

Also, in the embodiments of the present disclosure, "terminal" may be replaced by such terms as "user equipment(UE)", "mobile station(MS)", "subscriber station(SS)", "mobile subscriber station(MSS)", "mobile terminal" or "advanced mobile station(AMS)".

In addition, a transmission end refers to a fixed and/or mobile node that provides a data service or a voice service, and a reception end means a fixed and/or mobile node that receives a data service or a voice service. Accordingly, in the case of an uplink, a mobile station may be a transmission end, and a base station may be a reception end. Likewise, in the case of a downlink, a mobile station may be a reception end, and a base station may be a transmission end.

The embodiments of the present disclosure may be supported by standard documents disclosed in at least one of the following radio access systems: an IEEE 802 xx system, a 3rd generation partnership project (3GPP) system, a 3GPP long term evolution (LTE) system, a 3GPP 5th generation (5G) new radio (NR) system and a 3GPP2 system, and in particular, the embodiments of the present disclosure may be supported by the following documents: 3GPP TS (technical specification) 38.211, 3GPP TS 38.212, 3GPP TS 38.213, 3GPP TS 38.321, and 3GPP TS 38.331.

In addition, the embodiments of the present disclosure are applicable to another radio access system but is not limited to the above-described system. As an example, they are applicable to a system applied after a 3GPP 5G NR system and are not limited to a specific system.

That is, obvious steps and parts not described in the embodiments of the present disclosure may be described with reference to the above documents. In addition, all the terms disclosed in this document may be explained by the standard document.

Hereinafter, a preferred embodiment according to the present disclosure will be described in detail with reference to accompanying drawings. Detailed descriptions disclosed below together with accompanying drawings are intended to describe example embodiments of the present disclosure and not intended to show any sole embodiment in which a technical configuration of the present disclosure can be implemented.

In addition, specific terms used in the embodiments of the present disclosure are provided to help understand the present disclosure, and such specific terms may be used in any other modified forms without departing from the technical idea of the present disclosure.

The following technology may be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA) and the like.

For clarity of explanation, the descriptions below are based on a 3GPP communication system (e.g. LTE, NR and the like), but the technical idea of the present disclosure is not limited thereto. LTE may mean a technology after 3GPP TS 36.xxx Release 8. Specifically, the LTE technology after 3GPP TS 36.xxx Release 10 may be referred to as LTE-A, and the one after 3GPP TS 36.xxx Release 13 may be referred to as LTE-A pro. 3GPP NR may mean a technology after TS 38.xxx Release 15. 3GPP 6G may mean a technology after TS Release 17 and/or Release 18. "xxx' means the specific number of a standard document. LTE/NR/6G may be referred to collectively as 3GPP system.

Contents described in standard documents released earlier than the present disclosure may be referred to for the background art, terms and abbreviations used in the present disclosure. As an example, 36.xxx and 38.xxx standard documents may be referred to.

For terms, abbreviations, and other backgrounds that may be used in this document, reference may be made to the following standard document descriptions published prior to this document. In particular, terms, abbreviations, and other background technologies related to LTE/EPS (Evolved Packet System) may refer to 36.xxx series, 23.xxx series, and 24.xxx series, and NR (new radio)/5GS related terms and abbreviations and other backgrounds may refer to the 38.xxx series, 23.xxx series and 24.xxx series.

### 3GPP LTE/EPS

- 3GPP TS 36.211: Physical channels and modulation
- 3GPP TS 36.212: Multiplexing and channel coding
- 3GPP TS 36.213: Physical layer procedures
- 3GPP TS 36.214: Physical layer; Measurements
- 3GPP TS 36.300: Overall description
- 3GPP TS 36.304: User Equipment (UE) procedures in idle mode
- 3GPP TS 36.306: User Equipment (UE) radio access capabilities
- 3GPP TS 36.314: Layer 2 - Measurements
- 3GPP TS 36.321: Medium Access Control (MAC) protocol
- 3GPP TS 36.322: Radio Link Control (RLC) protocol
- 3GPP TS 36.323: Packet Data Convergence Protocol (PDCP)
- 3GPP TS 36.331: Radio Resource Control (RRC) protocol
- 3GPP TS 36.413: S1 Application Protocol (S1AP)
- 3GPP TS 36.423: X2 Application Protocol (X2AP)
- 3GPPP TS 22.125: Unmanned Aerial System support in 3GPP; Stage 1
- 3GPP TS 23.303: Proximity-based services (Prose); Stage 2
- 3GPP TS 23.401: General Packet Radio Service (GPRS) enhancements for Evolved Universal Terrestrial Radio Access Network (E-UTRAN) access
- 3GPP TS 23.402: Architecture enhancements for non-3GPP accesses
- 3GPP TS 23.286: Application layer support for V2X services; Functional architecture and information flows
- 3GPP TS 24.301: Non-Access-Stratum (NAS) protocol for Evolved Packet System (EPS); Stage 3
- 3GPP TS 24.302: Access to the 3GPP Evolved Packet Core (EPC) via non-3GPP access networks; Stage 3
- 3GPP TS 24.334: Proximity-services (ProSe) User Equipment (UE) to ProSe function protocol aspects; Stage 3
- 3GPP TS 24.386: User Equipment (UE) to V2X control function; protocol aspects; Stage 3

### 3GPP NR/SGS

- 3GPP TS 38.211: Physical channels and modulation
- 3GPP TS 38.212: Multiplexing and channel coding
- 3GPP TS 38.213: Physical layer procedures for control
- 3GPP TS 38.214: Physical layer procedures for data
- 3GPP TS 38.215: Physical layer measurements
- 3GPP TS 38.300: NR and NG-RAN Overall Description
- 3GPP TS 38.304: User Equipment (UE) procedures in idle mode and in RRC inactive state
- 3GPP TS 38.321: Medium Access Control (MAC) protocol
- 3GPP TS 38.322: Radio Link Control (RLC) protocol

### 3GPP TS 38.323: Packet Data Convergence Protocol (PDCP)

- 3GPP TS 38.331: Radio Resource Control (RRC) protocol
- 3GPP TS 37.324: Service Data Adaptation Protocol (SDAP)
- 3GPP TS 37.340: Multi-connectivity; Overall description
- 3GPP TS 23.501: System Architecture for the 5G System
- 3GPP TS 23.502: Procedures for the 5G System
- 3GPP TS 23.503: Policy and Charging Control Framework for the 5G System; Stage 2
- 3GPP TS 24.501: Non-Access-Stratum (NAS) protocol for 5G System (5GS); Stage 3
- 3GPP TS 24.502: Access to the 3GPP 5G Core Network (5GCN) via non-3GPP access networks
- 3GPP TS 24.526: User Equipment (UE) policies for 5G System (5GS); Stage 3

### 3GPP V2X

- 3GPP TS 23.285: Architecture enhancements for V2X services
- 3GPP TR 23.786: Evolved Packet System (EPS) and the 5G System (5GS) to support advanced V2X services
- 3GPP TS 23.287: Architecture enhancements for 5G System (5GS) to support Vehicle-to-Everything (V2X) services
- 3GPP TS 24.587: Vehicle-to-Everything (V2X) services in 5G System (5GS); Protocol aspects; Stage 3
- 3GPP TS 24.588: Vehicle-to-Everything (V2X) services in 5G System (5GS); User Equipment (UE) policies; Stage 3

Hereinafter, the present disclosure is described based on the terms defined as above.

Three major requirement areas of 5G include (1) an enhanced mobile broadband (eMBB) area, (2) a massive machine type communication (mMTC) area, and (3) an ultra-reliable and low latency communications (URLLC) area.

Some use cases may require multiple areas for optimization, and other use case may be focused on only one key performance indicator (KPI). 5G supports these various use cases in a flexible and reliable method.

### 5G System Architecture to which the Present Disclosure is Applicable

A 5G system is an advanced technology from 4G LTE mobile communication technology and supports a new radio access technology (RAT), extended long term evolution (eLTE) as an extended technology of LTE, non-3GPP access (e.g., wireless local area network (WLAN) access), etc. through the evolution of the existing mobile communication network structure or a clean-state structure.

The 5G system is defined based on a service, and an interaction between network functions (NFs) in an architecture for the 5G system can be represented in two ways as follows.

Reference point representation: indicates an interaction between NF services in NFs described by a point-to-point reference point (e.g., N11) between two NFs (e.g., AMF and SMF).

Service-based representation: network functions (e.g., AMF) within a control plane (CP) allow other authenticated network functions to access its services. The representation also includes a point-to-point reference point, if necessary.

### Overview of 3GPP System

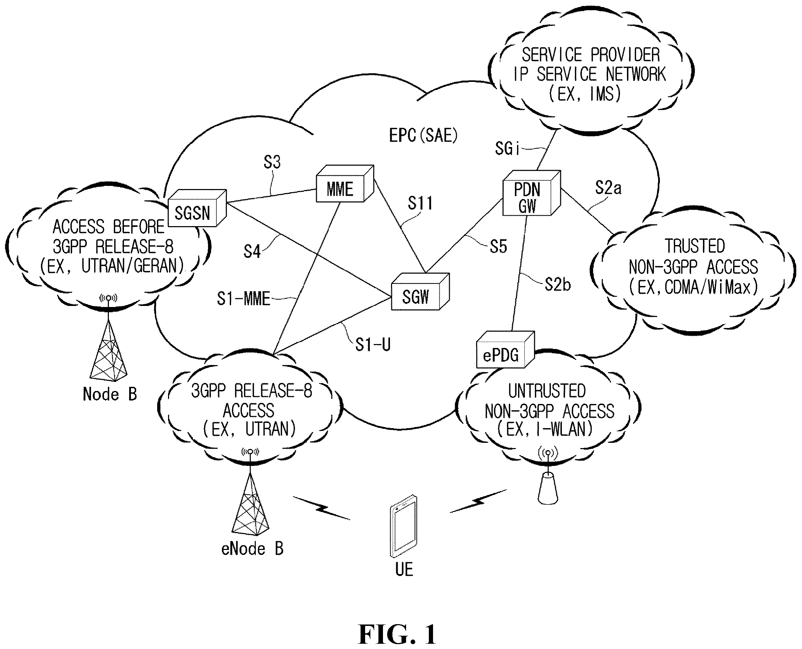

FIG. 1 illustrates various reference points.

An example of the network structure of FIG. 1 discloses an LTE/EPS-based network structure, and may operate with reference to matters described in standard documents published before this document. In the network structure of FIG. 1, at least one of SGW, PDN GW, MME, SGSN, and ePDG entities may operate with reference to matters described in standard documents published before this document. In addition, S1-MME, S1-U, S2a, S2b, S3, S4, S5, S11, and SGi may exist as interfaces between each entity, which are described in the standard document published before this document. can do. In addition, other entities and interfaces may be configured with reference to matters described in standard documents published before this document described above, and are not limited to specific forms.

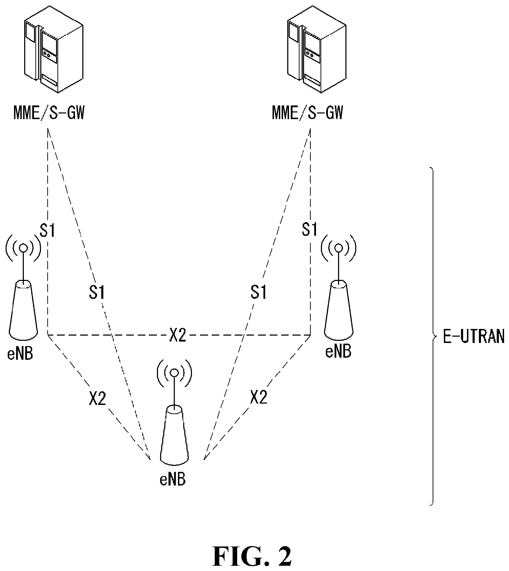

FIG. 2 illustrates an example of a network structure of an evolved universal terrestrial radio access network (E-UTRAN) to which the present disclosure is applicable.

An E-UTRAN system is an evolved version of the existing UTRAN system and may be, for example, 3GPP LTE/LTE-A system. Communication networks are widely deployed to provide various communication services such as voice (e.g., voice over Internet protocol (VoIP)) through IMS and packet data.

Referring to FIG. 2, an E-UMTS network includes an E-UTRAN, an EPC, and one or more UEs. The E-UTRAN consists of eNBs that provide control plane and user plane protocols to the UE, and the eNBs are interconnected with each other by means of the X2 interface, and reference may be made to matters described in standard documents published before this document.

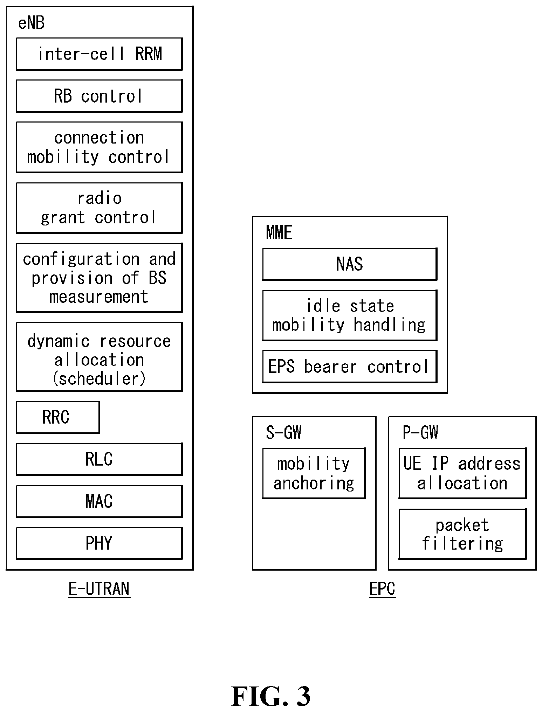

FIG. 3 is a view illustrating a general E-URTAN and an example of an architecture of an evolved packet core (EPC).

As illustrated in FIG. 3, the eNB can perform functions such as routing to gateway while radio resource control (RRC) connection is activated, scheduling and transmission of paging messages, scheduling and transmission of a broadcast channel (BCH), dynamic allocation of resources in uplink and downlink to the UE, configuration and provision for the measurement of the eNB, radio bearer control, radio admission control, and connection mobility control. The eNB can perform functions such as paging situation in the EPC, management of an LTE IDLE state, ciphering of a user plane, SAE bearer control, and ciphering and integrity protection of NAS signaling.

Annex J of 3GPP TR 23.799 shows various architectures combining 5G and 4G. And 3GPP TS 23.501 shows an architecture using NR and NGC.

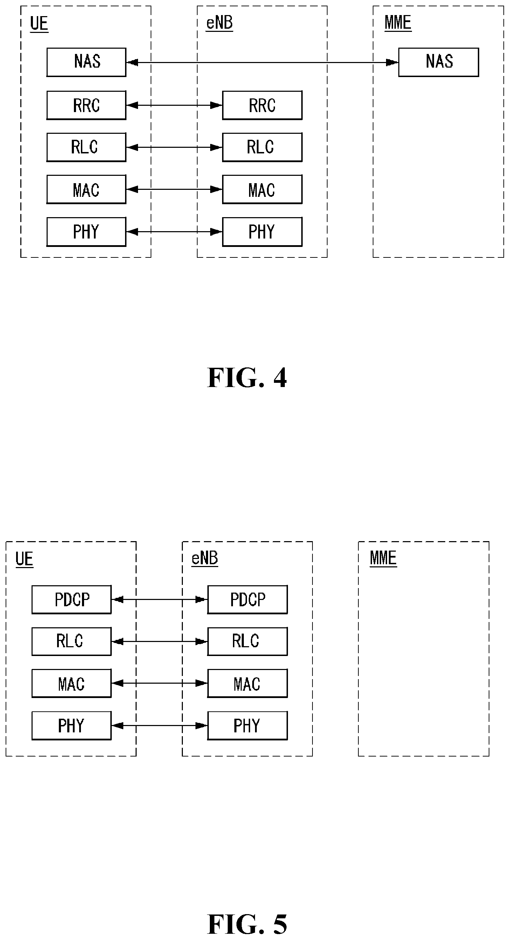

FIG. 4 is a view illustrating an example of a structure of a radio interface protocol in a control plane between user equipment (UE) and evolved node B (eNB), and FIG. 5 is view illustrating an example of a structure of a radio interface protocol in a user plane between UE and eNB.

The radio interface protocol is based on 3GPP radio access network standard. The radio interface protocol horizontally consists of a physical layer, a data link layer, and a network layer, and is vertically divided into a user plane for data information transmission and a control plane for control signaling delivery.

The protocol layers may be divided into L1 (first layer), L2 (second layer), and L3 (third layer) based upon three lower layers of an open system interconnection (OSI) standard model that is well known in the art of communication systems, and it is possible to refer to the matters described in the standard document published before this document described above.

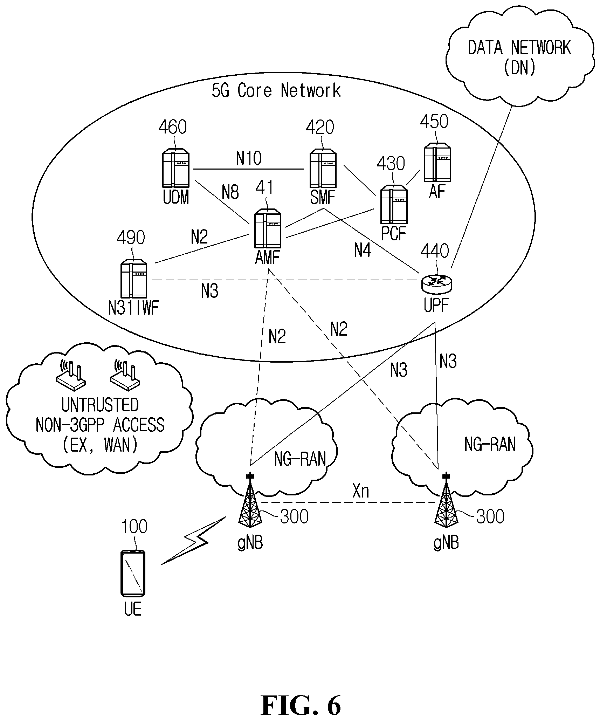

FIG. 6 is a view illustrating an example of a wireless communication system that is applied to the present disclosure.

5GC (5G Core) may include various components, part of which are shown in FIG. 6, including an access and mobility management function (AMF) 410, a session management function (SMF) 420, a policy control function (PCF) 430, a Prose user plane function (UPF) 440, an application function (AF) 450, unified data management (UDM) 460, and a non-3GPP interworking function (N3IWF) 490.

A UE 100 is connected to a data network via the UPF 440 through a next generation radio access network (NG-RAN) including the gNB 300. The UE 100 may be provided with a data service even through untrusted non-3GPP access, e.g., a wireless local area network (WLAN). In order to connect the non-3GPP access to a core network, the N3IWF 490 may be deployed.

The N3IWF 490 performs a function of managing interworking between the non-3GPP access and the 5G system. When the UE 100 is connected to non-3GPP access (e.g., WiFi referred to as IEEE 801.11), the UE 100 may be connected to the 5G system through the N3IWF 490. The N3IWF 490 performs control signaling with the AMF 410 and is connected to the UPF 440 through an N3 interface for data transmission.

The AMF 410 may manage access and mobility in the 5G system. The AMF 410 may perform a function of managing (non-access stratum) NAS security. The AMF 410 may perform a function of handling mobility in an idle state.

The UPF 440 performs a function of gateway for transmitting and receiving user data. The UPF node 440 may perform the entirety or a portion of a user plane function of a serving gateway (S-GW) and a packet data network gateway (P-GW) of 4G mobile communication.

The UPF 440 is a component that operates as a boundary point between a next generation radio access network (NG-RAN) and the core network and maintains a data path between the gNB 300 and the SMF 420. In addition, when the UE 100 moves over an area served by the gNB 300, the UPF 440 serves as a mobility anchor point. The UPF 440 may perform a function of handling a PDU. For mobility within the NG-RAN (which is defined after 3GPP Release-15), the UPF 440 may route packets. In addition, the UPF 440 may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF 440 may correspond to a termination point of a data interface toward the data network.

The PCF 430 is a node that controls an operator's policy. The AF 450 is a server for providing various services to the UE 100. The UDM 460 is a server that manages subscriber information, such as home subscriber server (HSS) of 4G mobile communication. The UDM 460 stores and manages the subscriber information in a unified data repository (UDR).

The SMF 420 may perform a function of allocating an Internet protocol (IP) address of the UE 100. In addition, the SMF 420 may control a packet data unit (PDU) session.

For convenience of explanation, hereinafter, reference numerals may be omitted for AMF 410, SMF 420, PCF 430, UPF 440, AF 450, UDM 460, N3IWF 490, gNB 300, or UE 100, which may operate with reference to contents described in standard documents released earlier than the present document.

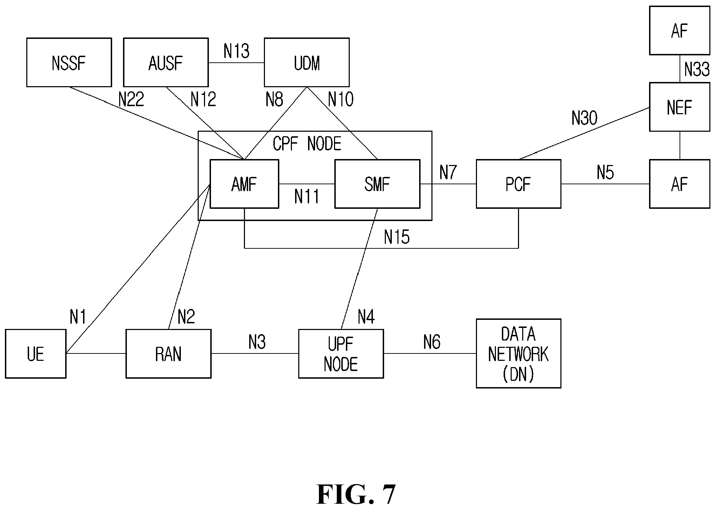

FIG. 7 is a view illustrating an example expressing a structure of a wireless communication system, which is applied to the present disclosure, from a node perspective.

Referring to FIG. 7, a UE is connected to a data network (DN) through a next generation RAN. A control plane function (CPF) node performs all or a part of the functions of a mobility management entity (MME) of 4G mobile communication and all or a part of serving gateway (S-GW) and PDN gateway (P-GW) functions. The CPF node includes AMF and SMF.

A UPF node performs a function of a gateway in which data of a user is transmitted and received.

An authentication server function (AUSF) authenticates and manages a UE. A network slice selection function (NSSF) is a node for network slicing described below.

A network exposure function (NEF) provides a mechanism that safely opens the service and function of 5G core.

Reference points in FIG. 7 are described as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in a non-roaming scenario and a reference point between AMF and PCF of a visited network in a roaming scenario. N16 represents a reference point between SMFs. N22 represents a reference point between AMF and NSSF. N30 represents a reference point between PCF and NEF. N33 may represent a reference point between AF and NEF, and the above-described entity and interface may be configured with reference to contents described in standard documents released earlier than the present document.

A radio interface protocol is based on the 3GPP radio access network standard. The radio interface protocol is horizontally divided into a physical layer, a data link layer, and a network layer, and is vertically divided into a user plane for transmission of data information and a control plane for transfer of control signal (signaling).

The protocol layers may be divided into L1 (layer-1), L2 (layer-2), and L3 (layer-3) based on the three lower layers of the open system interconnection (OSI) reference model widely known in communication systems.

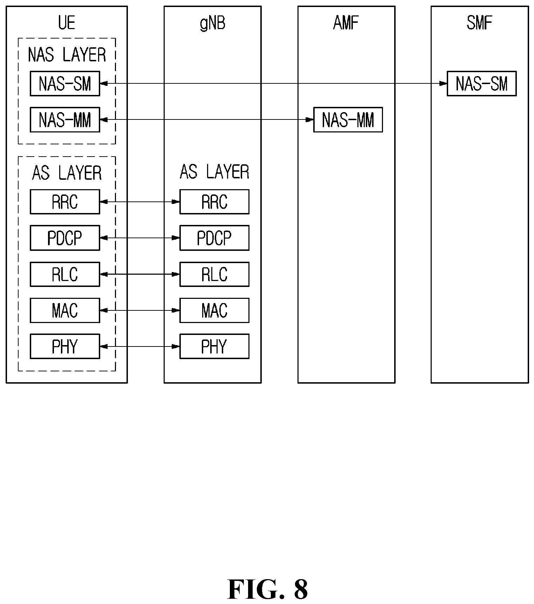

Hereinafter, the present disclosure will describe each layer of a radio protocol. FIG. 8 is a view illustrating an example of a radio interface protocol between UE and gBN.

Referring to FIG. 8, an access stratum (AS) layer may include a physical (PHY) layer, a medium access control layer, a radio link control (RLC) layer, a packet data convergence protocol (PDCP) layer, and a radio resource control (RRC) layer, and an operation based on each layer may be performed with reference to contents described standard documents released earlier than the present document.

### Communication system applicable to the present disclosure

Although not limited thereto, various descriptions, functions, procedures, proposals, methods and/or operation flowcharts disclosed in the present disclosure are applicable to various fields requiring wireless communication/connection (e.g., 5G) between devices.

Hereinafter, it will be described in greater detail with reference to the drawings. In the following drawings/description, the same reference numerals may denote the same or corresponding hardware blocks, software blocks or functional blocks unless otherwise stated.

### Communication system applicable to the present disclosure

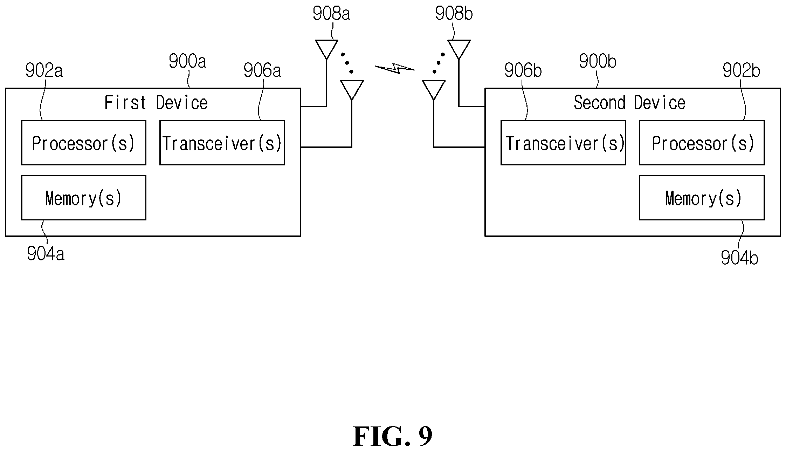

FIG. 9 is a view showing an example of a wireless device applicable to the present disclosure.

Referring to FIG. 9, a first wireless device 900a and a second wireless device 900b may transmit and receive radio signals through various radio access technologies (e.g., LTE or NR). Here, {the first wireless device 900a, the second wireless device 900b} may correspond to {the wireless device 100x, the base station 90} and/or {the wireless device 100x, the wireless device 100x}.

The first wireless device 900a may include one or more processors 902a and one or more memories 904a and may further include one or more transceivers 906a and/or one or more antennas 908a. The processor 902a may be configured to control the memory 904a and/or the transceiver 906a and to implement descriptions, functions, procedures, proposals, methods and/or operational flowcharts disclosed herein. For example, the processor 902a may process information in the memory 904a to generate first information/signal and then transmit a radio signal including the first information/signal through the transceiver 906a. In addition, the processor 902a may receive a radio signal including second information/signal through the transceiver 906a and then store information obtained from signal processing of the second information/signal in the memory 904a. The memory 904a may be coupled with the processor 902a, and store a variety of information related to operation of the processor 902a. For example, the memory 904a may store software code including instructions for performing all or some of the processes controlled by the processor 902a or performing the descriptions, functions, procedures, proposals, methods and/or operational flowcharts disclosed herein. Here, the processor 902a and the memory 904a may be part of a communication modem/circuit/chip designed to implement wireless communication technology (e.g., LTE or NR). The transceiver 906a may be coupled with the processor 902a to transmit and/or receive radio signals through one or more antennas 908a. The transceiver 906a may include a transmitter and/or a receiver. The transceiver 906a may be used interchangeably with a radio frequency (RF) unit. In the present disclosure, the wireless device may refer to a communication modem/circuit/chip.

The second wireless device 900b may include one or more processors 902b and one or more memories 904b and may further include one or more transceivers 906b and/or one or more antennas 908b. The processor 902b may be configured to control the memory 904b and/or the transceiver 906b and to implement the descriptions, functions, procedures, proposals, methods and/or operational flowcharts disclosed herein. For example, the processor 902b may process information in the memory 904b to generate third information/signal and then transmit the third information/signal through the transceiver 906b. In addition, the processor 902b may receive a radio signal including fourth information/signal through the transceiver 906b and then store information obtained from signal processing of the fourth information/signal in the memory 904b. The memory 904b may be coupled with the processor 902b to store a variety of information related to operation of the processor 902b. For example, the memory 904b may store software code including instructions for performing all or some of the processes controlled by the processor 902b or performing the descriptions, functions, procedures, proposals, methods and/or operational flowcharts disclosed herein. Herein, the processor 902b and the memory 904b may be part of a communication modem/circuit/chip designed to implement wireless communication technology (e.g., LTE or NR). The transceiver 906b may be coupled with the processor 902b to transmit and/or receive radio signals through one or more antennas 908b. The transceiver 906b may include a transmitter and/or a receiver. The transceiver 906b may be used interchangeably with a radio frequency (RF) unit. In the present disclosure, the wireless device may refer to a communication modem/circuit/chip.

In addition, the structure of a wireless device applicable to the present disclosure is not limited to FIG. 9, and may be configured in various forms. In particular, the present disclosure may be applied to a wireless device that performs an operation for transmitting and/or receiving a wireless signal, and is not limited to a specific form.

As an example, in case a terminal performs an access attempt to a network, the access attempt of the terminal may be performed according to a predetermined probability based on a parameter, and thus congestion control may be performed for network access. Specifically, in case congestion occurs to a network (e.g. 5G system), specific access of a terminal needs to be accepted or rejected, and a criterion for determination may be required. As an example, the above-described criterion may be determined based on at least one of operator policies, a deployment scenario, a subscriber profile, and an available service but may not be limited thereto.

Herein, different criteria for access control may be associated with an access identity and an access category. As an example, a network (e.g. 5G system) may provide a single unified access control based on an access identity and an access category. Herein, each access attempt in the single unified access control may be categorized based on one access category and at least one or more access identities.

Herein, as an example, a network (e.g. 5G system) may broadcast barring control information in at least one or more radio access network (RAN) areas. As an example, the barring control information may be a list of barring parameters associated based on an access identity and an access category. Herein, a terminal may determine whether or not to perform an access attempt based on terminal configuration information and a barring parameter in the broadcast barring control information. As an example, in case a plurality of core networks share a same RAN, the RAN may individually apply access control to each of the core networks. In addition, as an example, single unified access control may be applied both to a case of accessing a 5G core network through an existing system (E-UTRA) and to a case of accessing a 5G core network through a new system (NR). In addition, a RRC idle-state terminal a RRC inactive-state terminal, and a RRC connected-state terminal may also operate based on the above-described single unified access control.

In addition, as an example, single unified access control may support scalability based on an additional access identify and an access category. As another example, single unified access control may support an access category that is determined based on a criterion of an operator (e.g. network slicing, application, and application server), which will be described below. In addition, as an example, a network (e.g. 5G system) may control access of a terminal based on a policy of an operator. Herein, the network may control the access of the terminal based on a barring parameter that is determined based on an access identify and an access category.

Herein, as an example, an access identity may be configured in a terminal based on Table 1 below but is not limited thereto. In addition, as an example, an access category may be determined based on conditions related to UE and a type of access attempt, as shown in Table 2 below. As an example, based on Table 1 and Table 2 below, at least one or more access identities and a single access category may be selected and an access attempt may be performed.

As a concrete example, referring to Table 2, an access category may be set to a value of 0 to 63. Herein, 0 to 31 may be standardized access categories, and 32 to 63 may be access categories that are defined based on an operator.

Herein, as an example, each access category may correspond to a type of access attempt of a terminal. According to a situation where a terminal switches from a RRC idle mode to a RRC connected mode, an access category corresponding to each access attempt type may be determined. As an example, an NAS layer may determine a specific access category based on an access attempt of a terminal and indicate the access category to a RRC layer. Herein, the RRC layer may perform barring check to consider whether or not the access attempt is barred based on the access category, and may enable the access attempt of the terminal to be performed.

Specifically, in Table 2, an access attempt type may be determined based on an access category number. As an example, an access category number 0 may be a case where a network transmits paging and thus access of a terminal is performed. In addition, an access category number 1 may be an access attempt of a terminal in a situation other than emergency. In addition, an access category number 2 may be an access attempt of a terminal based on emergency. In addition, an access category number 3 may be a situation where access of a terminal is attempted in relation to signaling. In addition, an access category number 4 may be an access attempt based on call, an access category number 5 may be an access attempt based on video call, and an access category number 6 may be an access attempt based on SMS. In addition, an access category number 7 may be an access attempt not included in any other access categories. In addition, an access category number 8 may be an access attempt based on MO signaling.

**[Table 1]**

| Access Identity number | | UE configuration |
|---|---|---|
| 0 | | UE is not configured with any parameters from this table |
| 1 (NOTE 1) | | UE is configured for Multimedia Priority Service (MPS). |
| 2 (NOTE 2) | | UE is confiqured for Mission Critical Service (MCS). |
| 3-10 | | Reserved for future use |
| 11 (NOTE 3) | | Access Class 11 is configured in the UE. |
| 12 (NOTE 3) | | Access Class 12 is configured in the UE. |
| 13 (NOTE 3) | | Access Class 13 is configured in the UE. |
| 14 (NOTE 3) | | Access Class 14 is confiqured in the UE. |
| 15 (NOTE 3) | | Access Class 15 is configured in the UE. |
| NOTE 1: | Access identity 1 is used by UEs configured for MPS, in the PLMNs where the config uration is valid. The PLMNs where the configuration is valid are HPLMN, PLMNs equi valent to HPLMN, and visited PLMNs of the home country. Access Identity 1 is also v alid when the UE is explicity authorized by the network based on specific configured PLMNs inside and outside the home country. | |
| NOTE 2: | Access Identity 2 is used by UEs configured for MCS, in the PLMNs where the config uration is valid. The PLMNs where the configuration is valid are HPLMN or PLMNs e quivalent to HPLMN and visited PLMNs of the home country. Access Identity 2 is als o valid when the UE is explicity authorized by the network based on specific configu red PLMNs inside and outside the home country. | |
| NOTE 3: | Access Identities 11 and 15 are valid in Home PLMN only if the EHPLMN list is not pr esent or in any EHPLMN. Access Identities 12, 13 and 14 are valid in Home PLMN an d visited PLMNs of home country only. For this purpose, the home country is define d as the country of the MCC part of the IMSI. | |

**[Table 2]**

| Access Categ ory number | Conditions related to UE | Type of access attempt |
|---|---|---|
| 0 | All | MO signalling resulting from pa ging |
| 1 (NOTE 1) | UE is configured for delay tolerant service and subject to access control for Access Category 1, which is judged based on rela tion of UE's HPLMN and the selected PLM N. | All except for Emergency |
| 2 | All | Emergency |
| 3 | All except for the conditions in Access Ca tegory 1. | MO signalling on NAS level res ulting from other than paging |
| 4 | All except for the conditions in Access Ca tegory 1. | MMTEL voice (NOTE 3) |
| 5 | All except for the conditions in Access Ca tegory 1. | MMTEL video |
| 6 | All except for the conditions in Access Ca tegory 1. | SMS |
| 7 | All except for the conditions in Access Ca tegory 1. | MO data that do not belong to a ny other Access Categories (NO TE 4) |
| 8 | All except for the conditions in Access Ca tegory 1 | MO signalling on RRC level res ulting from other than paging |
| 9-31 | | Reserved standardized Access Categories |
| 32-63 (NOTE 2) | All | Based on operator classificatio n |
| NOTE 1: The barring parameter for Access Category 1 is accompanied with information that define whether Access Category applies to UEs within one of the following categori es: | | |
| a) UEs that are configured for delay tolerant service; | | |
| b) UEs that are configured for delay tolerant service and are neither in their HPLM N nor in a PLMN that is equivalent to it; | | |
| c) UEs that are configured for delay tolerant service and are neither in the PLMN li sted as most preferred PLMN of the country where the UE is roaming in the operator-define d PLMN selector list on the SIMIUSIM, nor in their HPLMN nor in a PLMN that is equivalent t o their HPLMN. When a UE is configured for EAB, the UE is also configured for delay tolera nt service. In case a UE is configured both for EAB and for EAB override, when upper layer indicates to override Access Category 1, then Access Category 1 is not applicable. | | |
| NOTE 2: When there are an Access Category based on operator classification and a standard ized Access Category to both of which an access attempt can be categorized, and the standa rdized Access Category is neither 0 nor 2, the UE applies the Access Category based on oper ator classification. When there are an Access Category based on operator classification and a standardized Access Category to both of which an access attempt can be categorized, and the standardized Access Category is 0 or 2, the UE applies the standardized Access Categor y. | | |
| NOTE 3: Includes Real-Time Text (RTT). | | |
| NOTE 4: Includes IMS Messaging. | | |

Herein, as an example, a NAS layer may determine the above-described access category based on access of a terminal and deliver the determined access category to an AS layer. In addition, a base station may broadcast information associated with the access category. As a concrete example, barring is applied in relation to a specific access category based on congestion control, access category-related information may include barring factor information and barring time information for the specific access category. Herein, in case a terminal, which receives broadcast access category information, performs an access attempt in a situation corresponding to a specific access category based on the above-described information, the access attempt may be performed in consideration of barring factor information and barring time information. As an example, the barring factor information may be an access attempt probability of a terminal, and the barring time information may be access attempt barring time information of the terminal. That is, the terminal may perform an access attempt based on the above-described information. A network may control the access of the terminal through the above-described information, and thus terminal access may be performed in consideration of network congestion. As another example, as compared with an existing system (e.g. rel 15), an access category may be added to a new system (e.g. rel 16). As an example, in Table 2 described above, 9-31 may be a reserved value, but in Table 3 below, access categories 9 and 10 may be added and 11-31 may be set to a reserved value. In addition, as an example, in a future new system, reserved values for access categories may be added based on an access attempt situation.

**[Table 3]**

| Access Catego ry number | Conditions related to UE | Type of access attempt |
|---|---|---|
| 0 | All | MO signalling resulting from pagin g |
| 1 (NOTE 1) | UE is configured for delay tolerant service and subject to access control for Access Category 1, which is judged based on rela tion of UE's HPLMN and the selected PLM N. | All except for Emergency, or MO e xception data |
| 2 | All | Emergency |
| 3 | All except for the conditions in Access Ca tegory 1. | MO signalling on NAS level resulti ng from other than paging |
| 4 | All except for the conditions in Access Ca tegory 1. | MMTEL voice (NOTE 3) |
| 5 | All except for the conditions in Access Ca tegory 1. | MMTEL video |
| 6 | All except for the conditions in Access Ca tegory 1. | SMS |
| 7 | All except for the conditions in Access Ca tegory 1. | MO data that do not belong to any other Access Categories (NOTE 4) |
| 8 | All except for the conditions in Access Ca tegory 1 | MO signalling on RRC level resulti ng from other than paging |
| 9 | All except for the conditions in Access Ca tegory 1 | MO IMS registration related signall ing (NOTE 5) |
| 10 (NOTE 6) | All | MO exception data |
| 11-31 | | Reserved standardized Access Cat Pqories |
| 32-63 (NOTE 2) | All | Based on operator classification |
| NOTE 1: The barring parameter for Access Category 1 is accompanied with information that defi ne whether Access Category applies to UEs within one of the following categories: | | |
| a) UEs that are configured for delay tolerant service; | | |
| b) UEs that are configured for delay tolerant service and are neither in their HPLMN nor in a PLMN that is equivalent to it; | | |
| c) UEs that are configured for delay tolerant service and are neither in the PLMN listed as most preferred PLMN of the country where the UE is roaming in the operator-defined PLMN selector list on the SIMIUSIM, nor in their HPLMN nor in a PLMN that is equivalent to their HPLM N. | | |
| When a UE is configured for EAB, the UE is also configured for delay tolerant service. I n case a UE is configured both for EAB and for EAB override, when upper layer indicates to ove rride Access Category 1, then Access Category 1 is not applicable. | | |
| NOTE 2: When there are an Access Category based on operator classification and a standardize d Access Category to both of which an access attempt can be categorized, and the stan dardized Access Category is neither 0 nor 2, the UE applies the Access Category based on operator classification. When there are an Access Category based on operator classi fication and a standardized Access Category to both of which an access attempt can be categorized, and the standardized Access Category is 0 or 2, the UE applies the standa rdized Access Category. | | |
| NOTE 3: Includes Real-Time Text (RTT). | | |
| NOTE 4: Includes IMS Messaging. | | |
| NOTE 5: Includes IMS registration related signalling, e.g. IMS initial registration, re-registration, a nd subscription refresh. | | |
| NOTE 6: Applies to access of a NB-IoT-capable UE to a NB-IOT cell connected to 5GC when the U E is authorized to send exception data. | | |

In addition, as an example, it is possible to consider a case where access to a network is needed for a terminal using a 3GPP system to receive a specific service. A case of requiring access to a network may be a case of transition from CM-IDLE state to CM-CONNECTED state. As another example, it may be a case of transition from RRC-INACTIVE state to RRC-CONNECTED state. As another example, it may be a case of requesting a user plane resource for a PDU session in a deactivated state where no user plane resource is allocated, and the case of requiring access to a network may not be limited to the above-described embodiment. Herein, as described above, according to a type of access attempt of a terminal, a RRC layer of the terminal may perform access category check. As an example, the terminal may obtain barring information according to an access identity of the terminal and a corresponding access category based on broadcast barring information. As an example, the barring information may be broadcast through a system information block (SIB) but is not limited to a specific embodiment.

In addition, as an example, a terminal may perform an access attempt based on received barring information. As a concrete example, in case a terminal performs an access attempt based on occurrence of a voice call, an access category number may be defined as 4 based on Table 3 described above. Herein, based on the determined category number 4, a NAS layer may query a RRC layer about whether or not the access category number 4 is barred. Herein, the RRC layer may determine, based on the above-described barring information, whether or not the access category number 4 is barred, and may transmit information on the determination to the NAS layer. As an example, in case barring information includes information that the above-described access category number 4 is barred, the RRC layer of the terminal may bar the access category number 4 based on the barring information and transmit information on a barring result to the NAS layer, but this is merely one example, and the present disclosure is not limited the above-described embodiment. Herein, only when the NAS layer receives information on a result that the access category is not barred, the NAS may transmit a request for actual access of the terminal to the RRC.

Herein, as described above, an access category value may be differently set in an existing system and a new system or a future system. Hereinafter, it is described as release for each system but may not be limited thereto. Herein, as an example, a release applied and implemented in a terminal and a release applied and implemented in a network may be different from each other. As a concrete example, based on a roaming situation of a terminal or for other reasons, a release applied and implemented in a terminal and a release applied and implemented in a network may be different from each other but may not be limited to a specific embodiment.

Herein, it is possible to consider a case where a release applied and implemented in a terminal is rel-x, a release applied and implemented in a network, which the terminal accesses, is rel-y, and x > y. As an example, x and y may be equal to or higher than release 15 based on 3GPP release, but may not be limited thereto. As a concrete example, it is possible to consider a case where a release applied and implemented in a terminal is rel-16 and a release applied and implemented in a network is rel-15. However, this is merely one example for convenience of explanation and is not limited to the above-described embodiment. That is, the same may apply to a case where a release applied and implemented in a terminal is higher than a release applied and implemented in a network. Herein, because the release of the terminal is higher, more access categories may be defined. As an example, an access category defined in a network may be a value of 0 to 8 based on Table 2 described above, and an access category defined in a terminal may be a value of 0 to 10 based on Table 3 described above. However, this is merely one example and is not limited thereto. That is, the number of standardized access categories defined in a terminal may be larger than that of standardized access categories defined in a network.

In addition, as an example, a network may transmit SIB information to apply the above-described single unified access control (UAC). Herein, access category (AC) barring information, which the network may broadcast, may include only information on standardized ACs corresponding to AC 0 to AC 8 and an operator-defined access category (hereinafter, ODAC) defined by an operator corresponding to AC 32-63. Herein, in case congestion occurs or is expected to the network, barring may be applied to a specific AC. As an example, barring information for applying barring may include information on a barring factor and a barring time, which is the same as described above.

Herein, as an example, since a standardized AC defined in a network and a standardized AC defined in a terminal may be different, even if a condition of a barring category intended by the network is matched, the terminal may correspond to another AC. As a concrete example, based on Table 2 (or rel 15), IMS signaling may have to use AC 7 (MO data). On the other hand, based on Table 3 (or rel 16), AC 9 may be used for IMS registration-related signaling. In the above-described case, since the network bars a specific AC but the terminal selects a different AC, barring may not be performed against the intention of the network. That is, the network wants to bar access of the terminal, but the terminal may bypass barring by selecting a different AC and thus attempt access to the network.

As an example, a network may deactivate barring for AC 7, but a rel-16 terminal may allocate not AC 7 but AC 9 for IMS-related signaling. At this time, because the network cannot transmit barring information for AC 9 and thus cannot bar an access attempt of the terminal using AC 9, the terminal may pass barring check for the access attempt in every case, That is, in case a release applied to a terminal is higher than a release applied to a network and the terminal uses an AC not supported by the network, the problem may be that the network may not be able to bar an access attempt corresponding the AC and the terminal definitely passes barring check, and this problem may be referred to as under barring issue. However, the present disclosure may not be limited to the term.

Herein, as an example, standardized AC values may be different in Table 2 and Table 3 described above, and standardized AC values may be different also in a system to be introduced later. In addition, as an example, the same under barring issue may also occur to a network that does not implement support for a specific access category based on an operator's choice. As another example, the above-described under barring issue may also occur in case where an AC pool implemented in a network and an AC pool implemented in a terminal are different from each other.

Hereinafter will be described a method of solving the under barring problem that may occur when a release supported by a terminal is higher than a release supported by a network (especially, gNB, ng-eNB), that is, when the network does not support an AC implemented in the terminal.

As an example, in case a release supported by a terminal is higher than a release supported by a network (e.g. gNB, ng-eNB), an AC implemented in the terminal may be supported by the network, and the above-described under barring problem may occur.

Herein, as an example, in order to the under barring problem, a base station (gNB or ng-eNB) may deliver information on a release currently implemented in a network or the base station to a terminal through a SIB. As an example, the SIB may included 1 bit indication information. Herein, the 1 bit indication information may indicate whether or not AC usage limitation (or AC limitation) is applied. As an example, in case the 1 bit indication information has a first value, AC usage limitation may be applied, and in case the 1 bit indication information has a second value, AC usage limitation may not be applied. However, this is merely one example, and the present disclosure is not limited to the above-descried embodiment. In addition, as an example, the 1 bit indication information may be include in a predefined SIB1. As another example, the 1 bit indication information may be included in another SIB. As another example, the 1 bit indication information may be implemented through new SIBx and not be limited to a specific form.

As an example, a RRC layer of a terminal may receive a SIB within coverage of a base station (node B) that broadcasts new information. Herein, the SIB may include AC usage limitation information as the above-described 1 bit indication information. In addition, as an example, the SIB may include a value (e.g. bit = 1) indicating that AC usage limitation is applied, and AC usage limitation may be performed based on the value.

Specifically, a RRC layer of a terminal may store AC usage limitation information. As an example, in case information indicating that AC usage limitation is applied is delivered to the terminal through the SIB, the RRC layer of the terminal may apply an AC usage limitation operation. That is, the RRC layer of the terminal may determine that only a default AC (or a basic AC) is applied in a cell or node B corresponding to the SIB. As an example, the terminal may use only the 9 standardized ACs of AC 0 to AC 8 in Table 2 described above and 32 operator defined ACs (ODACs), which are supported irrespective of release in every 5G network.

In addition, as an example, in case an access attempt occurs, a NAS layer may basically select and notify one of defined ACs to an AS layer. Herein, as an example, in case the NAS layer selects a value equal to or greater than AC 9, a terminal may optionally select a secondary AC. Specifically, in case of occurrence of an access attempt corresponding to AC 9 (MO IMS registration related signaling), the NAS layer may further provide an AC, which is selectable in consideration of unavailability of AC 9, secondary AC information. As an example, a secondary AC for AC 9 may be AC 7, but this is merely one example, and the present disclosure may not be limited thereto. In case the NAS layer delivers information on an access attempt to a RRC layer, the NAS layer may further deliver the secondary AC information together with an access identity and the AC.

At this time, the RRC of the terminal may perform barring check for an AC requested from the NAS layer. Herein, in case AC usage limitation is applied, the RRC layer of the terminal may perform modified barring check. Specifically, in case the RRC layer receives an access barring check request of the NAS layer while the above-described configuration is applied, the RRC layer may first check whether or not the AC is within a range of 0 to 8. That is, the RRC layer may check whether or not the AC is an AC within default ACs. At this time, if the AC is an AC within the default ACs, the terminal may perform an access attempt based on the above-described Table 2. On the other hand, in case an AC included in a barring check request from the NAS layer is a value equal to or greater than 9, the RRC layer may check whether or not a secondary AC is included. That is, in case the AC is not an AC within the default ACs, the RRC layer may check whether or not information on the secondary AC is included. At this time, if the information on the secondary AC is included, the RRC layer may perform barring check based on not an AC value received from the NAS layer but the secondary AC.

As a concrete example, in case of an access attempt where an AC included in a barring check request from a NAS layer is 9 and a secondary AC is notified as 7, a RRC layer may perform barring check for AC 7 instead of AC 9 based on AC usage limitation configuration. In the above-described case, because barring check is not performed for an AC supported by a network, a terminal may not use the AC supported by the network, and the under barring problem may be prevented.

As another example, in case a terminal receives AC usage limitation information through a SIB, a RRC layer of the terminal may deliver the information to a NAS layer. As an example, in case information indicating application of AC usage limitation is delivered to a terminal through the SIB, a NAS layer of the terminal may apply an AS limitation operation. The NAS layer may basically determine that only a default AC is applied to a cell/node B to which the terminal currently belongs to. That is, the terminal may use only the 9 standardized ACs of AC 0 to AC 8 in Table 2 and 32 ODACs, which are supported irrespective of release in every 5G network.

As an example, in case the above-described configuration is applied, a NAS layer may use only an AC supported during an AC determination process when an access attempt of a terminal occurs. As an example, the NAS may select an AC only from value of AC 0 to AC 8 and AC 31 to AC 63. As an example, even when an access attempt corresponding to AC 9 or AC 10 occurs, the NAS layer may select a second highest matching AC other than AC 9 and AC 10. Then, the NAS layer may deliver the selected AC to a RRC layer to perform barring check.

As another example, a NAS layer may use the above-described secondary AC. As an example, in the above-described case, a NAS layer of a terminal may receive a secondary AC value based on AC usage limitation information being received by the terminal through a SIB.

As another example, irrespective of whether or not a terminal receives AC usage limitation information, a NAS layer may use both a primary AC value and a secondary AC value. As an example, the NAS layer may deliver the primary AC value and the secondary AC value to a RRC layer for barring check. As an example, in case an AC value is within a default AC value, the NAS layer may deliver only one AC value to the RRC layer. On the other hand, in case the primary AC value is not within the default AC value, the NAS layer may deliver the primary AC value and the secondary AC value to the RRC layer. The RRC layer may perform barring check for both of the two AC values, and if any one of the values is barred, the RRC layer may determine that the access attempt is barred and may send a response to the NAS layer.

Based on what is described above, in case a network is congested or congestion is expected, applying access control may solve the problem caused by difference between a terminal release and a network release.

As another example, in case a release supported by a terminal is higher than a release supported by a network (e.g. gNB, ng-eNB), the above-described under barring problem may occur because the network does not support an AC implemented in the terminal.

Herein, a base station (e.g. gNB or ng-eNB) may deliver AC information currently implemented in the network or base station (or node B) to the terminal. As an example, the base station may deliver AC information implemented in the network or base station to the terminal based on an existing SIB1. As another example, the base station may transmit the AC information based on another SIB or a new SIBx. In addition, as an example, one configuration or a combination of two or more configurations may be based on the above-described SIB but is not limited to a specific form.

Herein, as an example, the base station (or node B) may broadcast and deliver a highest standardized AC value. As an example, standardized AC values may be 8 to 31 based on Table 2 or Table 3 described above. Herein, because a terminal operating based on Table 2 (or release 15) supports up to AC 8, a highest standardized AC value may be 8. On the other hand, as a terminal operating based on Table 3 (or release 16) supports up to AC 10, a highest standardized AC value may be 10. As another example, a different standardized AC value may be used according to network implementations, and thus different values may be used. As a concrete example, depending on network implementations, a case of supporting AC 9 but not AC 10 may be considered. Herein, a highest standardized AC value may be set to 9. However, this is merely one example, and the present disclosure is not limited the above-described embodiment. That is, a supported standardized AC value may be determined according to implementation of a current network or base station, and a highest standardized AC value thus determined may be broadcast to a terminal.

Herein, as an example, the highest standardized AC value broadcast to the terminal may be indicated in a binary form. As a concrete example, as standardized AC values range from 0 to 31, 5-bit information may be used. As an example, it may be "00001 = AC1, 00010 = AC2 ... 11111 = AC31", and 32 values may be needed. In addition, as an example, in case a standardized AC value is AC 8 or above with an enumerated form, it may be "00001 = AC8, 00010 = AC9 ..., 11000 = AC31", and 24 values may be needed. Herein, as an example, the above-described case may need 5-bit information. In addition, the above-described case is merely one example, and the present disclosure may not be limited thereto.

Herein, in case a terminal receives the above-described highest standardized AC value, the terminal may determine that no AC value greater than the value is available. As an example, in barring check, a RRC layer of the terminal may bar a request for an AC that is unavailable. In addition, as an example, the RRC layer of the terminal may deliver the above-described highest standardized AC value to a NAS layer so as to make only an AC value within the above-described range used from the NAS layer.

As another example, an AC may be supported in a bit map format. As an example, a base station (or node B) may broadcast values currently supported among standardized ACs by including a bit map of the values in a SIB. As an example, the bit map may include 3-octet or 4-octet size information, and Table 4 below configures each AC value based on 4 octets, and thus a standardized AC value, which is currently supported by a network or a base station, may be delivered to a terminal.

**[Table 4]**

| 8 | 7 | 6 | 5 | 4 | 3 | 2 | 1 | Bit |
|---|---|---|---|---|---|---|---|---|
| AC 0 | AC 1 | AC 2 | AC 3 | AC 4 | AC 5 | AC 6 | AC 7 | Octet 1 |
| AC 8 | AC 9 | AC 10 | AC 11 | AC 12 | AC 13 | AC 14 | AC 15 | Octet 2 |
| AC 16 | AC 17 | AC 18 | AC 19 | AC 20 | AC 21 | AC 22 | AC 23 | Octet 3 |
| AC 24 | AC 25 | AC 26 | AC 27 | AC 28 | AC 29 | AC 30 | AC 31 | Octet 4 |

Herein, as an example, Octet 1 may be a default AC value. As an example, the default AC value may be a value defined in release 15 and may be basically supported by a terminal. Accordingly, AC information in bit-map format may not require information on Octet 1, and in this case, the bit map may be determined as 3 octet. As an example, in case a network implements and supports every standardized AC value based on default AC value, a bit map may be configured as shown in Table 5 below.

**[Table 5]**

| **8** | **7** | **6** | **5** | **4** | **3** | **2** | **1** | **Bit** |
|---|---|---|---|---|---|---|---|---|
| **1** | **1** | **1** | **1** | **1** | **1** | **1** | **1** | **Octet 1** |
| **1** | **0** | **0** | **0** | **0** | **0** | **0** | **0** | **Octet 2** |
| **0** | **0** | **0** | **0** | **0** | **a** | **0** | **0** | **Octet 3** |
| **0** | **0** | **0** | **0** | **0** | **0** | **0** | **0** | **Octet 4** |

Herein, based on the above-described bit map information, the terminal may identify an available AC value in a current network and store the information. A RRC layer of the terminal may bar an access attempt request for an unavailable AC during barring check. In addition, as an example, the RRC layer of the terminal may deliver the above-described bit map value to the NAS layer so as to make only an available AC value used from the NAS layer based on the above-described bit map, and the present disclosure is not limited to a specific embodiment.

As another example, based on 3gpp release information or version information, AC information supported by a current network or base station may be delivered to a terminal. As an example, a base station (or node B) may include implemented specific 3gpp release information (e.g. r15, r16, r17, r18, etc.) in a SIB and deliver the information to a terminal. In addition, as an example, 3gpp release information with an enumerated format starting from release 15 may be included but may not be limited thereto.

As another example, as further detailed information, "specification version information" may be indicated to a terminal through a SIB. As an example, it is possible to a case where a new AC not backward compatible is reflected halfway within a same release, and in consideration of the above-described case, "specification version information" may be delivered to the terminal as further detailed information.

Herein, in case detailed release information is delivered to the terminal, the terminal may identify an unavailable AC by comparing a release implemented in the terminal and a release of a network. As a concrete example, in case the terminal implementation is release 16 and the current network or base station implementation is release 15, the terminal may determine that AC 9 and AC 10, which are added to release 16, are unavailable to the current network or base station. As an example, based on the above-described determination, a RRC layer of the terminal may bar a request for the unavailable AC during barring check. In addition, as an example, the RRC layer may deliver the above-described release value to a NAS layer so as to make the NAS layer use only an available AC value.

In addition, as an example, information implemented by a network in any other format or UAC-applicable AC information may be included in a SIB and delivered to the terminal. The terminal may process an AC value based on the above-described information and thus solve the under barring issue.

As another example, it is possible to consider a case where a low release is implemented across an overall operator network, not an individual base station (or node B). In addition, as an example, it is possible to consider a case where a low release is implemented in a specific AMF. In consideration of what is described above, an AMF may deliver AC information implemented in a current network or the AMF to a terminal. Herein, as described above, the information delivered by the AMF may be AC information like AC information delivered by a base station (or node B). However, the terminal may process the information delivered from the AMF based on a different method from the information delivered from the base station. As an example, the AMF may deliver AC information to the terminal by including the AC information in a registration accept message during a registration procedure. In addition, as an example, the AMF may deliver AC information to the terminal through a UE configuration update message.

Herein, AC information transmitted by an AMF may be delivered to a NAS layer. As an example, a SIB broadcast by a base station may not include the above-described AC information, and a terminal may obtain the AC information as a NAS message through an AMF but may not be limited to the embodiment. That is, a terminal may obtain AC information from an AMF based on a NAS message.

Herein, information delivered by an AMF may be a highest standardized AC value. When receiving the above-described highest standardized AC value, a NAS layer may not use any AC value greater than the highest standardized AC value. That is, in case an access attempt of a terminal occurs, the NAS layer may determine an AC value smaller than the above-described highest AC value at a step of determining an AC based on an access attempt type. As a concrete example, in an access attempt associated with MO exception data, a highest standardized AC may be considered as 10. Herein, because the highest standardized AC is 10, the NAS layer may determine an AC value for the access attempt associated with MO exception data as 10. On the other hand, in case the highest standardized AC is 8 or 9, the NAS layer cannot use AC 10 and thus use AC 1 based on the above-described Table 2 or Table 3. In addition, as an example, the NAS layer may use AC 3 based on an access attempt message but is not limited to a specific embodiment. That is, the NAS layer may determine and use an AC value for an access attempt, which is smaller than the highest standardized AC value.

As another example, based on AC information delivered by an AMF, a NAS layer may identify an available AC value in a current network through bit map information and store the AC value. As an example, the bit map may have a format shown in the above-described Table 4 or Table 5 but may not be limited thereto. The NAS layer may identify an AC value available at occurrence of an access attempt of a terminal based on the bit map information and determine an AC value within a corresponding range.

As another example, AC information delivered by an AMF may be 3gpp release information or version information. As an example, a NAS layer may identify an unavailable AC by comparing a release of a current terminal and delivered release information of a network. As an example, in case the terminal is a terminal implemented by release 16 and the network is a terminal implemented by release 15, the NAS layer may determine, based on release information, AC 9 and AC 10 are not available in the current network. In addition, as an example, "specification version information" may be indicated as further detailed version information, and the NAS layer may perceive an AC unavailable in the current network based on the above-described information. As another example, AC information that is implemented by a network in any other format or is applicable to UAC may be delivered by being included in a SIB, and the terminal may perceive an available AC value through the above-described information.

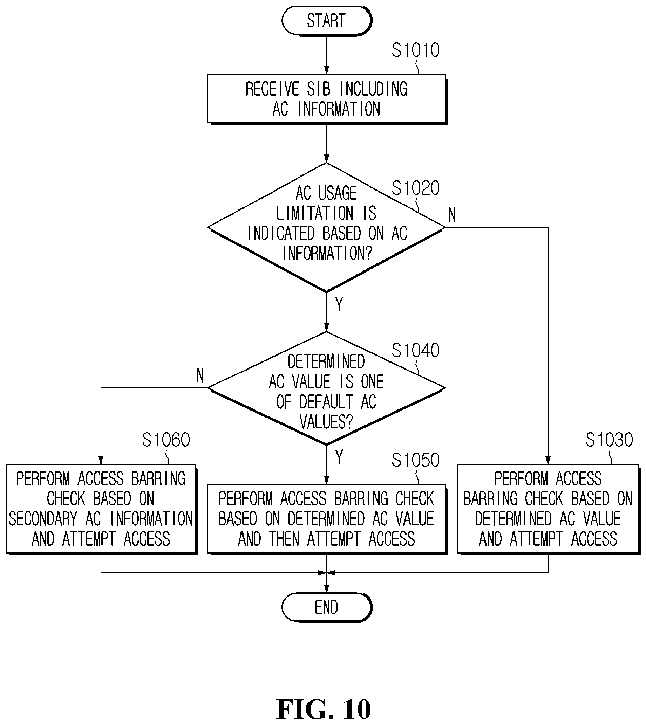

FIG. 10 is a view showing a method for operating a terminal that is applied to the present disclosure.

Referring to FIG. 10, the terminal may receive a SIB including AC information (S1010). Herein, the AC information may be determined based on a release that is supported in a current network or a base station. As a concrete example, the AC information included in the SIB may be information indicating whether or not there is AC usage limitation. Herein, in case AC usage is not limited based on the above-described information indicating whether or not there is AC usage limitation (S1020), the terminal may perform access barring check based on an AC value, which is determined an access attempt type, and then perform an access attempt (S1030). That is, the AC value used by the terminal may not be limited. As an example, the terminal may receive, through the SIB, at least one or more AC values and information on a barring factor and a barring time for each of the AC values. Herein, the barring factor may be probability information associated with an access attempt of the terminal, and the barring time may be information on a barring time for an access attempt of the terminal. As an example, the terminal may perform access barring check for a corresponding AC value based on the above-described information and perform an access attempt (S1030).

On the other hand, in case AC usage limitation is indicated based on AC information (S1020), the terminal may use only AC values within default AC values. Herein, in case an AC value determined based on the access attempt type of the terminal is one of the default AC values (S1040), the terminal may perform access barring check based on the determined AC value and perform an access attempt (S1050). On the other hand, in case an AC value determined based on the access attempt type of the terminal is a value other than the default AC values (S1040), the terminal may perform access barring check based on secondary AC information and perform an access attempt (S1060). As an example, a NAS layer of the terminal may deliver the secondary AC information together when determining and delivering an AC value to a RRC layer of the terminal. The RRC layer may perform access barring check based on the AC value determined by the NAS layer. Herein, in case the determined AC value is a value other than the default AC values, the RRC layer of the terminal may perform access barring check through an AC value that is indicated by a secondary AC value, and this is the same as described above.

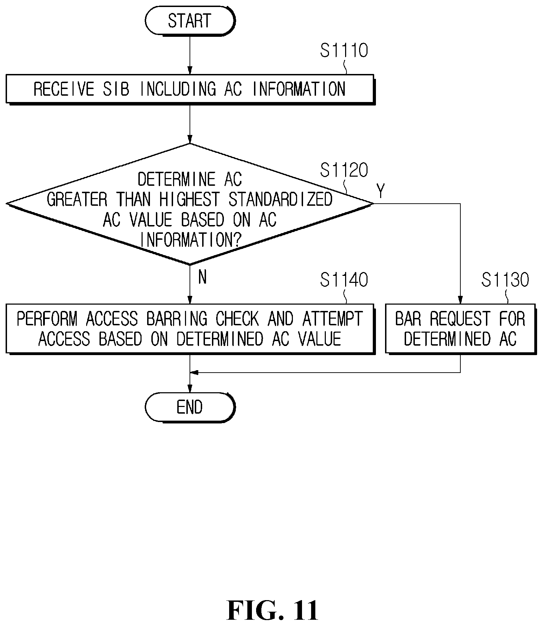

FIG. 11 is a view showing a method for operating a terminal that is applied to the present disclosure.

Referring to FIG. 11, the terminal may receive a SIB including AC information (S1110). Herein, the AC information may be determined based on a release that is supported in a current network or a base station. As a concrete example, the AC information included in the SIB may be a highest standardized AC value. Herein, the highest standardized AC value may be a highest standardized AC value that is supported in the current network or the base station, and the terminal may not be able to use any AC value that is greater than the highest standardized AC value.

Specifically, in case the terminal determines an AC value greater than the highest standardized AC value based on AC information (S1120), the terminal may not perform an access attempt by barring a request for the AC value during a barring check process (S1130). On the other hand, in case the terminal determines an AC value equal to or smaller than the highest standardized AC value based on AC information (S1120), the terminal may perform an access attempt by performing a barring check for the AC value (S1140). As an example, the terminal may receive, through the SIB, at least one or more AC values and information on a barring factor and a barring time for each of the AC values. Herein, the barring factor may be probability information associated with an access attempt of the terminal, and the barring time may be information on a barring time for an access attempt of the terminal. As an example, the terminal may perform access barring check for a corresponding AC value based on the above-described information and perform an access attempt.

As the examples of the proposal method described above may also be included in one of the implementation methods of the present disclosure, it is an obvious fact that they may be considered as a type of proposal methods. In addition, the proposal methods described above may be implemented individually or in a combination (or merger) of some of them. A rule may be defined so that information on whether or not to apply the proposal methods (or information on the rules of the proposal methods) is notified from a base station to a terminal through a predefined signal (e.g., a physical layer signal or an upper layer signal).

The present disclosure may be embodied in other specific forms without departing from the technical ideas and essential features described in the present disclosure. Therefore, the above detailed description should not be construed as limiting in all respects and should be considered as an illustrative one. The scope of the present disclosure should be determined by rational interpretation of the appended claims, and all changes within the equivalent scope of the present disclosure are included in the scope of the present disclosure. In addition, claims having no explicit citation relationship in the claims may be combined to form an embodiment or to be included as a new claim by amendment after filing.

### Industrial Applicability

The embodiments of the present disclosure are applicable to various radio access systems. Examples of the various radio access systems include a 3^{rd} generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method for operating a terminal in a wireless communication system, the method comprising:
receiving, by the terminal, a system information block (SIB) including access category (AC) information;
determining, by the terminal, an AC value by considering the AC information included in the SIB based on an access attempt type; and
performing access barring check for the determined AC value and performing an access attempt.

2. The method of claim 1, wherein the AC information included in the SIB includes information indicating whether or not there is AC usage limitation and is information indicating whether or not usage of the AC is limited,
wherein, based on the information indicating whether or not there is AC usage limitation having a first value, the terminal determines that only default ACs are applied in a cell or node B corresponding to the SIB, and
wherein, based on the information indicating whether or not there is AC usage limitation having a second value, the terminal determines that AC usage is not limited in the cell or the node B corresponding to the SIB.

3. The method of claim 2, wherein, based on the information indicating whether or not there is AC usage limitation being indicated as a first value, a radio resource control (RRC) layer of the terminal receives information on an access identity, an access category, and a secondary AC information from a non-access stratum (NAS) layer of the terminal, and
wherein, based on the RRC layer receiving an access barring check request from the NAS layer based on a first AC value, unless the first AC value is a value within default ACs, the access barring check is performed based on a second AC value that is indicated through the secondary AC information.

4. The method of claim 2, wherein, based on the information indicating whether or not there is AC usage limitation is indicated as the first value, the RRC layer of the terminal notifies application of the AC usage limitation to the NAS layer of the terminal, and
wherein the NAS layer determines the AC value among the default AC values.

5. The method of claim 1, wherein, based on the NAS layer of the terminal determining, for the AC value, an AC value other than default AC values, the NAS layer delivers a primary AC value and a secondary AC value to the RRC layer of the terminal, and
wherein the RRC layer performs the access barring check both for the primary AC value and for the secondary AC value and determines that the access attempt is barred, based on any one of the AC values being barred.

6. The method of claim 1, wherein the SIB includes a highest standardized AC value, and the terminal performs the access attempt based on the highest standardized AC value, and
wherein the highest standardized AC value is determined based on an AC that is supported in a network.

7. The method of claim 6, wherein, based on the AC value determined by the terminal being greater than the highest standardized AC value, the access attempt is barred based on the access barring check.

8. The method of claim 6, wherein the RRC layer of the terminal delivers the highest standardized AC value to the NAS layer of the terminal, and
wherein, based on the AC value being determined, the NAS layer determines, for the AC value, an AC value that is smaller than or equal to the highest standardized AC value.

9. The method of claim 1, wherein the SIB includes information on a bit map indicating supported standardized AC values,
wherein the bit map is configured as three octets or four octets, and
wherein the access attempt is performed based on one of the standardized AC values that are supported based on the bit map.

10. The method of claim 1, wherein the SIB includes release information or version information that is supported by a network or a base station, and
wherein the access attempt is performed based on one of standardized AC values that are determined based on the release information or the version information.

11. The method of claim 1, wherein the terminal obtains the AC information through a registration accept message or a UE configuration update command message as a NAS message.

12. A terminal operating in a wireless communication, the terminal comprising:
at least one transceiver;
at least one processor; and
at least one memory coupled operably with the at least one processor and storing instructions that instruct, when executed, the at least one processor to perform a specific operation,
wherein the specific operation is configured to:
control the transceiver to receive a system information block (SIB) including access category (AC) information,
determine an AC value by considering the AC information included in the SIB based on an access attempt type, and
perform access barring check for the determined AC value and perform an access attempt.

13. A method for operating a base station in a wireless communication system, the method comprising:
transmitting a system information block (SIB) to a terminal; and
receiving an access attempt request from the terminal,
wherein the SIB includes AC information, and the terminal checks access barring by considering the AC information included in the SIB based on an access attempt type of the terminal and then transmits the access attempt request.

14. A network operating in a wireless communication, the network comprising:
at least one transceiver;
at least one processor; and
at least one memory coupled operably with the at least one processor and storing instructions that instruct, when executed, the at least one processor to perform a specific operation,
wherein the specific operation controls the transceiver to:
transmit a system information block (SIB), and
receive an access attempt request from a terminal, and
wherein the SIB includes AC information, and the terminal checks access barring by considering the AC information included in the SIB based on an access attempt type of the terminal and then transmits the access attempt request.

15. A device comprising at least one memory and at least one processor functionally coupled with the at least one memory,
wherein the at least one processor controls the device to perform a specific operation, and
wherein the specific operation is configured to:
receive a system information block (SIB) including access category (AC) information,
determine an AC value by considering the AC information included in the SIB based on an access attempt type, and
perform access barring check for the determined AC value and perform an access attempt.

16. A non-transitory computer-readable medium storing at least one instruction, the non-transitory computer-readable medium comprising the at least one instruction that is executable by a processor,
wherein the at least one instruction is configured to: receive a system information block (SIB) including access category (AC) information,
determine an AC value by considering the AC information included in the SIB based on an access attempt type, and
perform access barring check for the determined AC value and perform an access attempt.
